# EUROPEAN PATENT APPLICATION

(11) **EP 1 450 507 A1**
(43) Date of publication of application: **25.08.2004**
(21) Application number: 03250617.2
(22) Date of filing: 31.01.2003
(51) Int. Cl.: H04J 14/02

(54) **Optical communication networks and methods of and the use of light sources for controlling them**

(71) Applicant: Corning Incorporated, Corning, New York 14831 (US)
(72) Inventor: Cotter, David, Woodbridge, Suffolk IP12 4JN (GB); Healey, Peter, Ipswich, Suffolk IP4 4RQ (GB); Smith, David William, Campsea Ash, Suffolk IP13 0PG (GB); Townsend, Paul David, Grundisburgh, Suffolk IP13 6XB (GB)
(74) Representative: Poole, Michael John

(57) **Abstract**

An optical network comprises a central source providing light in a plurality of spaced wavelength bands and including variable-gain optical amplifiers enabling the relative intensity of light in respective wavelength bands to be varied. A wavelength-routed network (preferably but not necessarily passive) receives light in all the wavelength bands from the central source and routes each wavelength band to a respective terminals. The terminals are operable to modulate and return received light in any of the said wavelength bands, and may be simple and identical, requiring no precision light source, as would otherwise be needed to allow multiplexing to use optical fibre efficiently.

The operator can adjust the semiconductor optical amplifiers to illuminate or disable individual terminals, as required, and can alter the intensity (and if required type) of light supplied to the terminals to maintain a satisfactory signal level, minimising need for engineer visits.

## Description

This invention relates to optical networks for communications, and more especially (but not exclusively) to access networks and local area networks; it also relates to methods of controlling such networks and the use of particular light sources for this purpose.

Optical fibres are now firmly established as the preferred means of conveying trunk communications, but they are up to now seldom used for direct connection to individual subscribers or to terminals in local area networks, where their advantages of reliability, capacity and security are equally valid, largely because of the relatively high cost of high-quality fibre and of optical terminal equipment compared with their electrical analogues.

The present invention seeks to reduce costs by increasing the utilisation of fibre by multiplexing, and yet to allow the use of simple, low-maintenance terminal equipment which can be completely identical for all terminals (or for each of a small number of terminal types, say differing in bit rate), facilitating mass production, and in which delicate or temperature-sensitive equipment can be wholly or largely located in a small number of central locations (telephone exchanges or central offices, or local network controllers).

It will be readily understood that the cost of fibre per terminal can be reduced if as much as possible of the length of fibre serving the terminal is shared with one or preferably a plurality of other terminals. In principle, this can easily be achieved by wavelength-division multiplexing, in which each terminal of a sharing group has a unique optical wavelength allocated to it, but if that requires each terminal to have a robust light source that is stable at its allocated wavelength and in intensity, it is not likely to be cost-effective.

In accordance with one aspect of the present invention, an optical network comprises:
a central source providing light in a plurality of spaced wavelength bands and including variable-gain optical amplifiers enabling the relative intensity of light in respective wavelength bands to be varied;
plural distributed terminals operable to modulate and return received light in any of the said wavelength bands; and
a wavelength-routed network receiving light in all the said wavelength bands from the central source and routing each wavelength band to a respective one of the terminals.

Preferably the variable-gain optical amplifiers are an array of semiconductor optical amplifiers, in which case they will be followed by a wavelength-division multiplexer for receiving their outputs and passing them together to the wavelength-routed network; they may also be preceded by a wavelength-division demultiplexer receiving light from a single multi-band source, though it is also possible to use a separate source for each wavelength band.

The central source is preferably a spectral-slicing source in which light in a range of wavelengths (a source with either a continuous spectrum or a spectrum made up of many lines) is generated and spaced wavelength bands selected from it by use of appropriate wavelength-division multiplexers and/or filters.

Suitable light generators for use in such a source include erbium-doped (or more generally rare-earth doped) fibre amplifiers or semiconductor optical amplifiers, in each case functioning as light sources by amplification of spontaneous light emission. They also include
- super-continuum sources,
- mode-locked lasers,
- superluminescent diodes,
- other light-emitting diodes of sufficient optical power and spectral bandwidth, and
- wavelength combs.
Either coherent or incoherent light can be used.

Light from such generators can be sliced to obtain the required separated wavebands by wavelength-division multiplexers based on arrayed-waveguide gratings, thin-film filters, directional couplers, or filters of the blazed-grating type, all of which are established in the optical communications art. If the type of multiplexer used is one (such as an arrayed waveguide grating) that allows multiple wavelength orders to pass to each channel, band-pass filters or auxiliary coarse wavelength-division multiplexers may be used at the source to prevent this, or elsewhere in the network to take advantage of it by subsequently separating the different orders and allocating them to different purposes (for instance to upstream and downstream signals, where this may allow the same multiplexers to serve for routing light in both directions).

The simplest and preferred form of terminal is a reflection modulator, in which light is reflected back at the facet opposite that at which it enters. Alternatively, an transmission modulator can be used and light returned using a second fibre or preferably by using a waveguide loop and an optical circulator to return the modulated light to the same fibre that provided the input light.

In most cases we prefer that the wavelength-routed network is entirely passive, but a reconfigurable network could be used, for example if it were desired to allocate a particular wavelength band to different terminals at different times (for example, to take advantage of "diversity" by allocating light only to terminals that have indicated a desire to transmit).

Except in the less preferred case in which a separate return fibre is used, it will be necessary to separate modulated light returned from the terminals from the path returning to the light source, for example by use of a circulator, so that it can be routed to an appropriate switch (in the case of an access network) or to the intended receiver terminal (in the case of a local area network). In the latter case, the receivers may (depending on the network type) be connected by a reconfigurable optical network so that signals are routed exclusively to the terminal intended to receive them.

The operator of a network in accordance with the invention can, by adjustment of individual optical amplifiers, turn on or off individual subscribers (for example permitting a strictly off-peak tariff to be applied without requiring timing equipment on the subscriber's premises) and can adjust light levels to compensate for degradation by ageing or minor damage, reducing the need for expensive engineer site visits. It is also possible to allocate different types of light to individual terminals, for example if a subscriber upgrades his terminal equipment.

If it should be desired to synchronise the terminals of the network, the variable-gain semiconductor optical amplifiers could be used additionally to modulate the light supplied to them with a clock signal.

Thus the invention includes a method of controlling an optical network comprising forming the network with
a central source providing light in a plurality of spaced wavelength bands and including variable-gain optical amplifiers enabling the relative intensity of light in respective wavelength bands to be varied;
plural distributed terminals operable to modulate and return received light in any of the said wavelength bands; and
a wavelength-routed network receiving light in all the said wavelength bands from the central source and routing each wavelength band to a respective one of the terminals
and adjusting the said variable optical amplifiers individually to determine the level (if any) of light reaching the respective terminals.

It also includes the use of a central source providing light in a plurality of spaced wavelength bands and including variable-gain optical amplifiers enabling the relative intensity of light in respective wavelength bands to be varied for controlling the operation of an optical network of the kind comprising plural distributed terminals each operable to modulate and return received light in any of the said wavelength bands and a wavelength-routed network receiving light in all the said wavelength bands from a central source and routing each wavelength band to a respective one of the terminals.

The invention will be further described, by way of example, with reference to the accompanying drawings in which:
Figure 1 is a diagram of the relevant part of an access network in accordance with the invention; and
Figure 2 is a diagram of a local-area network in accordance with the invention.

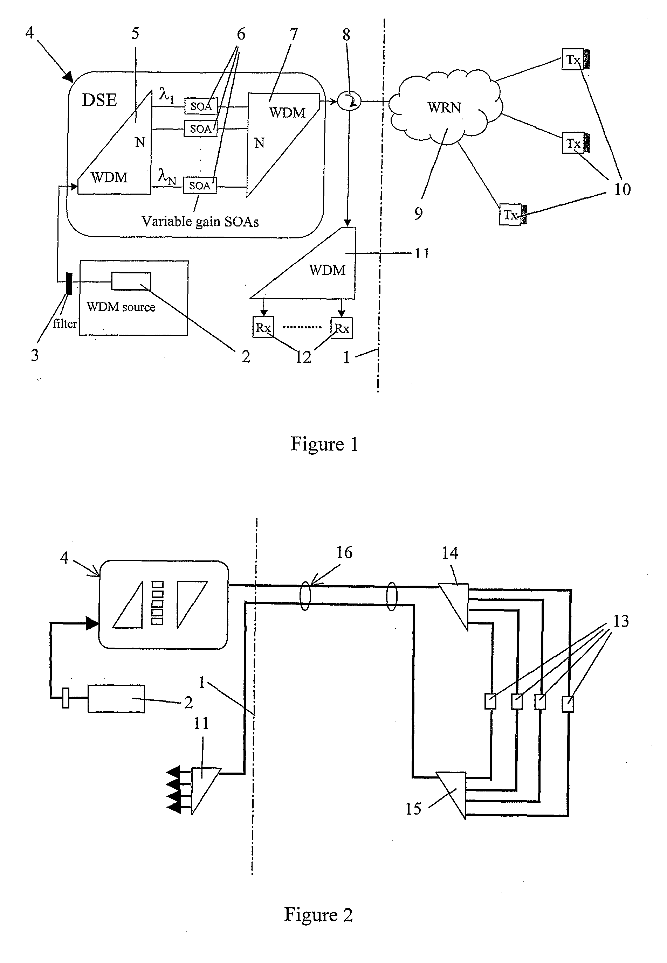

In the apparatus of figure 1, all the components shown to the left of the line 1 are to be located within one of the central offices (exchanges) of the total communication network. Light from a broadband source 2, say an erbium-doped fibre amplifier operating to generate amplified spontaneous emission radiation, is first passed through a band-pass filter 3 to select an overall system waveband and thence to an integrated optical circuit 4 comprising a wavelength-division demultiplexer 5 which separates an appropriate number of spaced individual wavebands λ₁ to λₙ, discarding wavelengths between the chosen wavebands, and passes each waveband to a respective semiconductor optical amplifier 6. The outputs from the semiconductor optical amplifiers are recombined by a wavelength-division multiplexer 7 and pass *via* a circulator 8 to a wavelength-routed network 9 set up to send light of each waveband to a corresponding one of identical subscriber installations comprising reflection modulators 10. When operational, each reflection modulator 10 applies data modulation signals to the received light and returns it *via* the network 9 to the circulator 8, which separates the returned signal and routes it (say) to a further wavelength-division multiplexer which separates the channels for onward transmission in any appropriate way to their intended receivers 12.

It will be apparent that (perhaps with rare exceptions for some types of telemetry installation) each subscriber installation will also require a receiver and appropriate network connections to route incoming signals to it, but these may be conventional (either wholly separate or where appropriate incorporated into a full duplex or half-duplex system to reduce fibre requirement) and as they have no relevance to the invention they will not be further described.

In the preferred form of the invention, the wavelength-routed network 9 is passive and uses fixed wavelength-division demultiplexers (or less desirably filters) so that each terminal modulator 10 receives always the same wavelength band, so that no reconfigurable or active components are needed outside of the central office.

The network operator can activate or de-activate individual terminals at will by turning on or off the corresponding semiconductor optical amplifier 6 (any light passing through it in its turned-off state being insufficient in intensity to return a detectable signal) and can adjust the light level sent to each active terminal to optimise the intensity of the signal being received from it, for example increasing it if the losses increase due to ageing, minor damage, or fractional misalignment in the subscriber's equipment or the part of the network serving it.

Figure 2 illustrates a minor modification in which the reflection modulators 10 in the subscriber's transmitters are replaced by transmission modulators 13; the passive wavelength-routed network, here represented by two wavelength-division multiplexers 14 and 15, returns the modulated light signals through a separate fibre in cable 16 to the demultiplexer 11 in the central office. This is considered a less desirable form of the invention, because it needs more fibre, though it does eliminate the need for circulator 8.

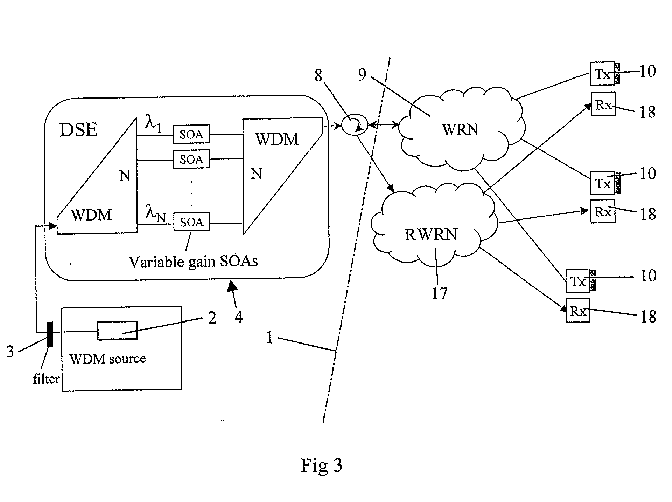

The local-area network of Figure 3 is substantially the same as the network of Figure 1, except that the circulator 8 passes the received data signals directly to a reconfigurable wavelength-routed network 17 which (in a conventional way) distributes signals to the receivers 18 of the terminals to which they are respectively addressed.

*Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.*

## Claims

1. An optical network comprising:
a central source providing light in a plurality of spaced wavelength bands and including variable-gain optical amplifiers enabling the relative intensity of light in respective wavelength bands to be varied;
plural distributed terminals operable to modulate and return received light in any of the said wavelength bands; and
a wavelength-routed network receiving light in all the said wavelength bands from the central source and routing each wavelength band to a respective one of the terminals.

2. An optical network as claimed in claim 1 in which the variable-gain optical amplifiers are an array of semiconductor optical amplifiers and are followed by a wavelength-division multiplexer for receiving their outputs and passing them together to the wavelength-routed network.

3. An optical network as claimed in claim 2 in which the semiconductor optical amplifiers are also preceded by a wavelength-division demultiplexer receiving light from a single multi-band source.

4. An optical network as claimed in any one of claims 1-3 in which the central source is a spectral-slicing source in which light in a continuous range of wavelengths is generated and spaced wavelength bands selected from it by use of appropriate wavelength-division multiplexers and/or filters.

5. An optical network as claimed in claim 4 in which the light generator is selected from
• erbium-doped (or other rare-earth doped) fibre amplifiers,
• semiconductor optical amplifiers,
• super-continuum sources,
• mode-locked lasers
• superluminescent diodes,
• other light-emitting diodes of sufficient optical power and spectral bandwidth, and
• wavelength combs.

6. An optical network as claimed in claim 5 comprising wavelength-division multiplexers based on arrayed-waveguide gratings, thin-film filters, directional couplers, or filters of the blazed-grating type, for slicing to obtain the required spaced wavebands.

7. An optical network as claimed in any one of claims 1-6 in which at least some terminals each comprise a reflection modulator.

8. An optical network as claimed in any one of claims 1-7 in which all the terminals are substantially identical.

9. An optical network as claimed in any one of claims 1-8 in which the said wavelength-routed network is entirely passive.

10. A method of controlling an optical network comprising forming the network with
a central source providing light in a plurality of spaced wavelength bands and including variable-gain optical amplifiers enabling the relative intensity of light in respective wavelength bands to be varied;
plural distributed terminals operable to modulate and return received light in any of the said wavelength bands; and
a wavelength-routed network receiving light in all the said wavelength bands from the central source and routing each wavelength band to a respective one of the terminals
and adjusting the said variable optical amplifiers individually to determine the level (if any) of light reaching the respective terminals.

11. The use of a central source providing light in a plurality of spaced wavelength bands and including variable-gain optical amplifiers enabling the relative intensity of light in respective wavelength bands to be varied for controlling the operation of an optical network of the kind comprising plural distributed terminals each operable to modulate and return received light in any of the said wavelength bands and a wavelength-routed network receiving light in all the said wavelength bands from a central source and routing each wavelength band to a respective one of the terminals.
